Europäisches Patentamt

European Patent Office

Office européen des brevets

(19)

(11) Publication number: **0 046 415**
**B1**

(12) **EUROPEAN PATENT SPECIFICATION**

(45) Date of publication of patent specification: **27.12.84**

(51) Int. Cl.³: **B 01 J 13/00, B 41 M 5/00**

(21) Application number: **81303805.6**

(22) Date of filing: **20.08.81**

(54) Microcapsules for pressure-sensitive recording.

(30) Priority: **20.08.80 JP 114333/80**
**09.07.81 JP 107398/81**

(43) Date of publication of application:
**24.02.82 Bulletin 82/08**

(45) Publication of the grant of the patent:
**27.12.84 Bulletin 84/52**

(84) Designated Contracting States:
**BE CH DE FR GB IT LI NL SE**

(56) References cited:
**DE-A-1 903 704**
**FR-A-2 441 417**
**GB-A-1 301 052**
**GB-A-1 507 739**

(73) Proprietor: **KUREHA KAGAKU KOGYO**
**KABUSHIKI KAISHA**
**9-11 Horidome-cho 1-chome Nihonbashi Chuo-**
**ku**
**Tokyo (JP)**

(72) Inventor: **Okada, Yoshio**
**16-1 Maehara Nishiki-machi**
**Iwaki-shi Fukushima-ken (JP)**
Inventor: **Igarashi, Yuriko**
**174 Kaminakada Nishiki-machi**
**Iwaki-shi Fukushima-ken (JP)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

**0 046 415**

## Description

This invention relates to microcapsules suitable for a pressure-sensitive recording paper, their production, pressure-sensitive recording paper or transfer sheets bearing the microcapsules and the use of the microcapsules in pressure-sensitive recording.

A conventional pressure-sensitive recording paper comprises an upper sheet (CB sheet) coated on the back with microcapsules enclosing a solution of colour-former, for instance a leuco-type dye, and a lower sheet (CF) sheet coated on the front with a colour-developer such as an acid clay or an acidic resin. When the CB sheet is written or typed on, the microcapsules are broken upon pressure so that the contents are transferred to the CF sheet, where the colour is developed by the interaction of the colour-former and the acidic materials.

Pressure-sensitive recording papers have been used in various fields, particularly as a recording paper for computers, with improvement of business efficiency. Microcapsules are required which possess excellent moisture stability, thermal stability and light stability because the pressure-sensitive recording paper tends to be used even under severe environmental conditions. Further, microcapsules are required which also possess excellent solvent-resistance as mentioned hereinafter in preparing pressure-sensitive recording papers.

Pressure-sensitive recording papers are conventionally manufactured by coating a paper with a micro-capsule-slurry comprising a water-soluble binder and additives in water as a dispersion medium. In this case, however, the drying rate is slow due to the water-containing paper. Also the paper lacks dimensional stability because of wrinkles.

A faster-drying dispersion medium may be preferably used in order to solve the above-mentioned problems and improve productivity. Such a suitable dispersion medium may be an organic solvent conventionally used for printing inks and the like, for example an alcohol such as isopropyl alcohol or ethyl alcohol, an ester such as ethyl acetate, a ketone such as methyl ethyl ketone, a hydrocarbon solvent such as kerosene, toluene or xylene, or a vegetable oil such as linseed oil or castor oil. However, microcapsules which are conventionally used or which have been proposed are not stable in such organic solvents. Microcapsules, which can be stable in the organic solvent, may accomplish a faster drying rate and improve the productivity without causing wrinkles. Furthermore, the microcapsules may enable a partially coated pressure-sensitive recording paper to be prepared by spot printing. These are the reasons why microcapsules excellent in solvent-resistance are required.

The term "solvent-resistance" herein means the stability of a microcapsule in an organic solvent mentioned above.

Gelatine has been mainly used as the wall material of microcapsules (hereinafter referred to as gelatine capsules). Gelatine capsules, however, have poor moisture and light stability and also no solvent-resistance.

On the other hand, various microcapsules have been proposed in which the wall is made of hydrophobic polymers. An urea-formaldehyde resin, a melamine-formaldehyde resin, a polyamide and a polyurethane have been used as a wall material. The microcapsule wall is prepared by the so-called "in situ" or surface polymerization technique. However, these conventional microcapsules are not satisfactory for a pressure-sensitive recording paper, particularly because of their poor solvent-resistance, although they possess slightly better moisture and light stability as compared to a gelatine capsule.

For example, a microcapsule which consists of urea-formaldehyde resin and is formed by a conventional process has insufficient solvent-resistance although it is better than a gelatine capsule in other respects. Other methods using urea-formaldehyde resins have been proposed in which a polymer having different properties from the urea-formaldehyde resin, such as an ethylene-maleic anhydride copolymer (U.S. Patent No. 4087376), styrene-maleic anhydride copolymer (Japanese Patent Laying Open No. 108706/79) or a reactive tenside (U.S. Patent No. 3778383), is used together with the urea-formaldehyde resin. However, the microcapsules obtained possess insufficient solvent-resistance.

Microcapsules which are made of melamine-formaldehyde resins by a conventional method are also poor in terms of solvent-resistance. For example, the use of a styrene-maleic anhydride copolymer (U.S. Patent No. 4,233,178), a reactive tenside with hydrophobic and hydrophilic groups derived from a urea-formaldehyde compound or a melamine-formaldehyde compound (U.S. Patent No. 3,778,383), and a cationic urea-formaldehyde prepolymer and acrylamide-acrylic acid copolymer (U.S. Patent No. 4,105,823) together with a melamine-formaldehyde prepolymer has been proposed. However, the microcapsules obtained are still unsatisfactory, particularly in terms of their solvent-resistance, although there are some improvements in moisture and light stability compared with gelatine capsules.

Microcapsules with a wall comprising melamine, urea and formaldehyde have been proposed. For example, use of a melamine-urea-formaldehyde resin prepolymer only, a reactive tenside and a material having hydrophobic- and hydrophilic groups derived from a urea-formaldehyde compound or melamine-formaldehyde compound (U.S. Patent No. 3,778,383), a styrene-maleic anhydride copolymer and a vinyl acetate-maleic anhydride copolymer (Japanese Patent Laying Open No. 47139/80) together with melamine, urea and formaldehyde is known in the prior art. DE—A—1093704 (which corresponds to US—A—3607775) discloses the preparation of microcapsules by complex coacervation using an aqueous dispersion containing a water-soluble cationic urea resin.

2

It is possible to overcome the problem of solvent-resistance according to the present invention by microcapsules which contain a colour-former solution and the walls of which comprise a polycondensate of a water-soluble cationic urea resin with at least one prepolymer selected from melamine-formaldehyde, urea-formaldehyde and melamine-urea-formaldehyde prepolymers (hereinafter referred to as the "prepolymer") wherein the polycondensate is formed by the polycondensation of the prepolymer and the water-soluble cationic urea resin, which polycondensation proceeds together with a complex coacervation caused by the interaction of the water-soluble cationic urea resin and an anionic surfactant.

These microcapsules can possess excellent solvent-resistance, thermal stability and light stability due to their uniform and compact walls. The microcapsules are prepared by polycondensing the or each prepolymer and the water-soluble cationic urea resin in the presence of an anionic surfactant.

The present invention also provides a process for preparing microcapsules for a pressure-sensitive recording paper by complex coacervation using an aqueous dispersion containing a water-soluble cationic urea resin, in which a water-soluble cationic urea resin and at least one prepolymer selected from melamine-formaldehyde, urea-formaldehyde and melamine-urea-formaldehyde prepolymers are polycondensed on the surface of dispersed droplets of a colour-former solution in the presence of an anionic surfactant.

In this process the droplets of colour-former can be dispersed in an aqueous solution consisting of the water-soluble cationic urea resin, the or each prepolymer and the anionic surfactant. Polycondensation occurs whilst complex-coacervation takes place between the water-soluble cationic urea resin and the anionic surfactant.

Formation of the microcapsule wall is accomplished by polycondensation of the prepolymer and the water-soluble cationic urea resin on the surface of the solvent droplet, by adjusting the pH of the aqueous solution in an acidic condition. Polycondensation of the prepolymer and the water-soluble cationic urea resin proceeds together with the complex coacervation caused by the interaction of the water-soluble cationic urea resin and the anionic surfactant.

In the invention, an important feature is that the water-soluble cationic urea resin and the anionic surfactant are used together with the prepolymer. A very stable aqueous dispersion of the colour-former solution can be maintained throughout the microencapsulation process due to the presence of a small amount of the water-soluble cationic urea resin and the anionic surfactant. Therefore, a uniform and compact wall can be formed without causing any coagulation or precipitation.

One embodiment of the microencapsulation process of the invention is described below:

In a first step, a colour-former solution is dispersed in an aqueous mixture, in which at least the water-soluble cationic urea resin and the anionic surfactant are present, by suitable means such as a homogenizer, stirrer or ultra-sonic means so that a liquid droplet diameter of around 1 to 8 $\mu$m is achieved. The prepolymer may be added to the aqueous dispersion during the process. Then an acid-catalyst is added to the aqueous dispersion containing the prepolymer with gentle stirring. The pH and the temperature are maintained in the range of 2.5 to 6.0 and 15 to 60°C, respectively, for 2 to 15 hours. In addition, an adequate amount of water may be added during the polycondensation reaction.

The prepolymer of the invention may be made of melamine and/or urea, and formaldehyde. This includes melamine-formaldehyde prepolymers, urea-formaldehyde prepolymers and melamine-urea-formaldehyde prepolymers which includes a mixture of melamine-formaldehyde prepolymer and urea-formaldehyde prepolymer and a prepolymer obtained by reacting melamine, urea and formaldehyde simultaneously.

"Melamine-formaldehyde prepolymer" herein includes methylol melamines such as mono- to hexamethylol melamine, a mixture of methylol melamines of different hydroxymethylation, a mixture of the methylol melamine(s), melamine and formaldehyde and any oligomer(s) obtained by the further reaction of melamine and formaldehyde, e.g. methylol melamine(s) with a degree of polymerization of 2 to 10 which may be subjected to encapsulation in the form of a transparent colloidal solution obtained by treating the oligomers with hydrochloric acid. Further, the melamine-formaldehyde prepolymer may be prepared as in the Examples hereinafter.

"Urea-formaldehyde prepolymer" herein includes methylol ureas such as mono- to tetramethylol urea, a mixture of methylol ureas of different degrees of hydroxymethylation, a mixture of the methylol urea(s), urea and formaldehyde, any oligomer(s) obtained by the further reaction of urea and formaldehyde, e.g. methylol urea(s) with a degree of polymerization of 2 to 5 and having hydrophilic group(s) which may be used in the form of a transparent colloidal solution.

The molar ratio of formaldehyde to melamine and urea in the starting materials used in preparation of the prepolymers when using the melamine-urea-formaldehyde prepolymer is determined according to the following formulae:

$$R = F/(U+M)$$

$$F = aU + bM$$

wherein

R is molar ratio of formaldehyde to the total of melamine and urea,

3

F is the moles of formaldehyde,

U is the moles of urea,

M is the moles of melamine,

the coefficient a is in the range of 0.6—4.0, preferably 1.0—3.0 and the coefficient b is in the range of 1.0—9.0, preferably 1.6—7.0.

The ratio of formaldehyde to melamine and/or urea is an important factor for the formation of a microcapsule wall which is homogeneous and excellent in mechanical strength, impermeability and particularly solvent-resistance.

The properties of the microcapsule are varied by changing the ratio of melamine and urea in the starting materials. For example, when the prepolymer is a melamine-formaldehyde prepolymer or a prepolymer of which the composition ratio is close to a melamine-formaldehyde prepolymer, the microcapsule obtained has a large specific gravity and can be easily separated, resulting in a high concentration of microcapsules in the slurry. On the other hand, when a stable slurry of microcapsules is required, a larger ratio of urea is preferable. The molar ratio of melamine to urea is preferably between 0.15 to 5.0 from the view-point of solvent-resistance.

The amount of the prepolymer used in encapsulation is preferably in the range of 0.1 to 1 g per g of the colour-former solution.

The "water-soluble cationic urea resin" herein is preferably an urea-formaldehyde resin prepared by introduction of a cationic modifier. The water-soluble cationic urea resin is easily prepared by adding a modifier to an urea-formaldehyde prepolymer and then polycondensing in a known manner. Modifiers include tetra ethylene pentamine, diaminoethanol, dicyandiamide, diethyl aminoethanol, guanyl-urea and the like. The weight ratio of the water-soluble cationic urea resin to the prepolymer is preferably in the range of 0.01:1 to 0.5:1.

The anionic surfactant includes salts of aliphatic acids, sulphate esters of higher alcohols, salts of alkylarylsulphonates and the like, preferably sodium dodecylbenzenesulphonate. The weight ratio of the anionic surfactant is preferably in the range of 0.01 to 0.1 parts by weight per part of the water-soluble cationic urea resin. Such a weight ratio causes a stable dispersion of the colour-former solution in a wide pH range, i.e. pH 2.5 to 6.0.

The acid-catalyst includes a low molecular weight carboxylic acid such as formic acid, acetic acid and citric acid, an inorganic acid such as hydrochloric acid, nitric acid and phosphoric acid, an acidic salt or an easily hydrolyzable salt such as aluminium sulphate, titanium oxychloride, magnesium chloride, ammonium chloride, ammonium nitrate, ammonium sulphate and ammonium acetate and a mixture thereof.

In the process for preparing a microcapsule, the colour-former solution is advantageously emulsified to form a stable dispersion with low viscosity and the microcapsule wall formed can have a very high impermeability, as compared with a conventional process such as a process using only an aqueous solution of prepolymer, using a cationic urea resin with a prepolymer and using a reactive tenside derived from an urea resin with a prepolymer (for example, U.S. Patent No. 3778383).

The reason why the process of the invention has the above-mentioned advantages can be explained due to the complex-coacervation between the water-soluble cationic urea resin and the anionic surfactant in a certain composition thereof and a certain.pH range. With the same composition, mild coacervation occurs at pH 4 to 6 and violent coacervation at pH range of about 7 and below 3. Accordingly, for the emulsification of the colour-former solution a pH must be chosen in a range where coacervation occurs mildly in order to prevent agglomeration of particles. Accordingly, the pH is adjusted to the preferable range in the microencapsulation step by adding an acid-catalyst. In the microencapsulation step, polymerization of the prepolymer and complex-coacervation occur simultaneously, resulting in formation of a microcapsule wall, and the water-soluble cationic urea resin is also polycondensed to form a hydrophobic polymer and to be a component of the microcapsule having compact and uniform wall. As described above, the microencapsulation is a combination of complex-coacervation and 'in situ' polymerization and the invention provides a novel method for preparing microcapsules for a pressure-sensitive recording paper.

The microcapsules obtained contain a colour-former solution as a core material, and the wall is uniform and compact and comprises a polymer of melamine and/or urea and formaldehyde. The microcapsules have an excellent solvent-resistance which has not been obtained by the conventional methods, as shown in the Examples below. Accordingly, the microcapsule can improve the productivity of pressure-sensitive recording papers since an organic solvent can be used in their preparation instead of a conventional aqueous slurry. Further, the microcapsules may be used in the form of an aqueous slurry, and the pressure-sensitive recording paper thus obtained also has excellent light stability. Any colour-former known in the art may be employed. Suitable solvents for the colour-former solution are, for example, alkylnaphthalene, phenyyxylylethane, alkylbiphenyl, hydrogenated terphenyl, chlorinated paraffin oil, mineral oil and mixtures thereof.

The following Examples illustrate the invention.

## Example 1:

(1a) Preparation of melamine-formaldehyde prepolymer:

126 g of melamine was added to 324 g of a 37% aqueous solution of formaldehyde which was previously adjusted to pH 9.0 by a 2% aqueous solution fo sodium hydroxide. The mixture was stirred at 70°C to dissolve the melamine, then 450 g of water at 70°C was added, and after stirring for 2 minutes, an aqueous solution of melamine-formaldehyde prepolymer was obtained by cooling to room temperature.

(1b) Preparation of water-soluble cationic urea resin:

One gram of triethanolamine was added with stirring to a mixture containing 162 g of a 37% aqueous solution of formaldehyde and 60 g of urea. The pH of the mixture became 8.8, and then the reaction was carried out at 70°C for 30 minutes. To 40 g of the reaction mixture were added 24 g of water and 6 g of tetramethylenepentamine. The pH of this mixture was adjusted to 3 with 15% hydrochloric acid while stirring at 70°C. The reaction proceeded for one hour. With the progress of the reaction, the pH of the mixture became lower. After adjusting again the pH to 3 by adding a 10% aqueous solution of sodium hydroxide the reaction mixture was cooled to 55°C. The reaction mixture was neutralized by adding a 10% aqueous solution of sodium hydroxide at the time the viscosity of the reaction mixture had become 200 cps (200 m Pas), and 400 g of water was added. An aqueous solution of water-soluble cationic urea resin was obtained.

(1c) Preparation of colour-former solution:

15 g of crystalviolet lactone (CVL) and 5 g of benzoyl-leucomethyleneblue (BLMB) were dissolved in 300 g of di-isopropylnaphthalene to make a colour-former solution for pressure-sensitive recording paper.

(1d) Microencapsulation:

To 200 g of the aqueous solution of melamine-formaldehyde prepolymer prepared in the step (1a), were added 158 g of the aqueous solution of the water-soluble cationic urea resin prepared in the step (1b), and 10 ml of a 10% aqueous solution of triethanolamine and 100 g of water. The pH of the mixture was adjusted to 4.9 with 10% citric acid, then 3 ml of 10% Neoperex (an anionic surfactant comprising mainly sodium dodecylbenzenesulphonate, manufactured by Kao-Atlas Co.) and 150 ml of the colour-former solution prepared in the step (1c) was added to the aqueous mixture. Then the colour-former solution was dispersed by a homogenizer to droplets of 1 to 3 $\mu$m diameter. The pH of the aqueous dispersion was adjusted to 3.8 with a 10% aqueous solution of citric acid while stirring gently at 30°C. After one hour, 300 ml of water was added, and after further stirring for 2 hours a slurry of microcapsules was obtained which was not coloured blue in coating on a CF sheet. After filtering the slurry by a membrane filter and air-drying, a free-flowing powder of microcapsules was obtained.

## Examples 2 to 6:

Microcapsules were prepared as in Example 1 under the conditions shown in Table 1 for preparing the prepolymer and for microencapsulation.

5

TABLE 1

| Example No. | Conditions of preparing the prepolymer | | | | Conditions of microencapsulation | | | |
|---|---|---|---|---|---|---|---|---|
| | F/M[1] | Temperature (°C) | pH | Time (min) | The prepolymer/ colour-former solution (wt./wt.) | Temperature (°C) | pH | Time (hr) |
| 2 | 2 | 70 | 9.0 | 25 | 0.36 | 30 | 5.5 | 3 |
| 3 | 8 | 50 | 9.0 | 30 | 0.36 | 30 | 3.6 → 2.5[2] | 3 → 12[2] |
| 4 | 4 | 50 | 8.5 | 60 | 0.20 | 60 | 4.0 → 3.0[3] | 2 → 3[3] |
| 5 | 4 | 60 | 9.0 | 25 | 0.50 | 40 | 4.0 → 3.6[4] | 2 → 1[4] |
| 6 | 4 | 60 | 9.0 | 25 | 0.70 | 20 | 3.6 | 3 |

Notes: 1) The molar ratio of formaldehyde to melamine in the starting materials for the prepolymer.

2) After reaction at pH 3.6 for 3 hours, the reaction proceeded at pH 2.5 for 12 hours.

3) After reaction at pH 4.0 for 2 hours, the reaction proceeded at pH 3.0 for 3 hours.

4) After reaction at pH 4.0 for 2 hours, the reaction proceeded at pH 3.6 for one hour.

# 0 046 415

### Examples 7 to 9:

A water-soluble cationic urea resin was prepared by using instead of tetraethylenepentamine in the step (1b) of Example 1, 15 g of diaminoethanol (Example 7), 10 g of dicyandiamide (Example 8) and 8 g of diethylaminoethanol (Example 9), respectively. Microcapsules were obtained in the same manner as Example 1 except for using the respective water-soluble cationic urea resin above instead of that prepared in the step (1b) of Example 1. The microcapsules obtained had the same properties as those obtained in Example 1.

### Example 10:

(10a) Preparation of urea-formaldehyde prepolymer:

After mixing 146 g of a 37% aqueous solution of formaldehyde, 60 g of urea, and 0.5 g of triethanolamine, the mixture was reacted at 70°C for one hour, then an aqueous solution of urea-formaldehyde prepolymer was obtained.

(10b) Microencapsulation:

The whole aqueous solution of water-soluble cationic urea resin prepared in the step (1b) of Example 1 and 6.6 g of a 6% aqueous solution of sodium n-dodecylbenzenesulphonate (as an anionic surfactant) were added to the aqueous solution of urea-formaldehyde prepolymer prepared in the step (10a). The pH of this mixture was adjusted to 5.2 with a 10% aqueous solution of citric acid.

The colour-former solution prepared in the step (1c) in Example 1 was emulsified in the mixture by a homogenizer to droplets of 2 to 8 $\mu$m diameter. The dispersion was heated to 50°C while stirring gently. After adjusting the pH to 3.8 with a 10% aqueous solution of citric acid, the reaction proceeded for one hour, then 1,200 g of water was added slowly. The reaction proceeded for another 2 hours. The pH of the reaction mixture was adjusted to 2.6 with a 10% aqueous solution of citric acid and the reaction was continued for one more hour. After the reaction mixture was cooled to room temperature and stirred further for 10 hours, a slurry of microcapsules for a pressure-sensitive recording paper was obtained.

After filtering the slurry by a membrane filter and air-drying, a free-flowing powder of microcapsules was obtained.

### Example 11:

To a mixture of 40 g of a 37% aqueous solution of formaldehyde, 12 g of urea, 0.12 g triethanolamine were added. The reaction proceeded at 70°C for one hour to obtain an aqueous solution of urea-formaldehyde prepolymer. Then 5 g of Uramine P-1500 (a 38% aqueous solution of a cationic urea resin, manufactured by Mitsui-Toatsu Co.) and 1.5 g of a 10% aqueous solution of sodium n-dodecylbenzenesulphonate were added to the aqueous solution of urea-formaldehyde prepolymer, and further water was added to make a total weight of 150 g. Then a 10% aqueous solution of citric acid was added to adjust the pH to 5.2.

75 g of the colour-former solution prepared in Example 1 was emulsified in the above aqueous mixture by a homogenizer to form droplets of 2 to 8 $\mu$m diameter. After a 10% aqueous solution of citric acid was added to adjust the pH to 3.5 with gentle stirring, the reaction proceeded at 50°C for one hour. 300 G of water was gradually added over one hour with stirring and keeping the temperature at 50°C. At the end of the addition of the water, a 10% aqueous solution of citric acid was added to adjust the pH to 2.6. After the reaction had proceeded for a further 40 minutes, the reaction mixture was stirred at room temperature for 10 hours to obtain a slurry of microcapsules for a pressure-sensitive recording paper.

### Example 12:

Microcapsules were prepared as in Example 1 except for using a mixture of 135 g of melamine-formaldehyde prepolymer prepared by the same method as Example 1 and 69 g of urea-formaldehyde prepolymer prepared by the same method as Example 10 for the prepolymer.

### Examples 13 to 16:

The molar ratio of the melamine-formaldehyde prepolymer (MF) and the urea-formaldehyde prepolymer (UF) used for the prepolymer in Example 12 is shown in Table 2. The microencapsulation process was the same as Example 1.

### Example 17:

A melamine-formaldehyde prepolymer was prepared by using melamine and formaldehyde at a molar ratio of 1:2 as the starting material in step (1a) of Example 1. Microcapsules were prepared as in Example 12 by using the melamine-formaldehyde prepolymer thus obtained instead of the melamine-formaldehyde prepolymer in Example 12.

7

TABLE 2

| Example No. | Weight ratio of prepolymer in the aqueous solution (MF/UF) | M/U[1] | F/M + U[2] | prepolymer/ colour-former solution (weight ratio) | KU/prepolymer[3] |
|---|---|---|---|---|---|
| 12 | 2 : 1 | 0.43 | 2.57 | 0.37 | 0.138 |
| 13 | 3.6 : 8.2 | 0.1 | 2.00 | 0.37 | 0.137 |
| 14 | 6 : 7 | 0.196 | 2.16 | 0.37 | 0.138 |
| 15 | 18 : 1 | 4.1 | 3.22 | 0.36 | 0.139 |
| 16 | 38 : 1 | 7 | 3.44 | 0.36 | 0.139 |
| 17 | 7.6 : 6.2 | 0.43 | 1.86 | 0.38 | 0.132 |

Notes: 1) Molar ratio of melamine (M) to urea (U) in the starting materials used in the preparation of melamine-formaldehyde prepolymer and urea-formaldehyde prepolymer.

2) Molar ratio of formaldehyde (F) to the total of melamine and urea in the starting materials used in preparation of the polymers.

3) Weight ratio of water-soluble cationic urea resin (KU) to the prepolymer.

### Example 18:

To 56.9 g of a 37% aqueous solution of formaldehyde (formalin) adjusted to pH 8.6 by a 5% aqueous solution of sodium hydroxide, 22.6 g of melamine and 20.5 g of urea were added, mixed and dissolved at 50°C with stirring, and water was added. After one hour, the resulting melamine-urea-formaldehyde prepolymer was obtained by cooling. Microcapsules were prepared as in Example 1 by using this melamine-urea-formaldehyde prepolymer as the prepolymer.

### Examples 19 to 22:

Microcapsules were prepared in the same manner as Example 18 wherein melamine-urea-formaldehyde prepolymers with the weight ratio of melamine, urea and formalin shown in Table 3 were used. In microencapsulation, 4 g of 10% Neoperex was used as the anionic surfactant in Example 22 and 2 g of 10% Neoperex as the anionic surfactant and 240 g of the water-soluble cationic urea resin in Example 1 was used in Example 21.

TABLE 3

| Example No. | Weight ratio[1] | M/U[2] | F/M + U[3] | Prepolymer/colour-former solution (weight ratio) | KU/ prepolymer[4] | A—SA/KU[5] |
|---|---|---|---|---|---|---|
| 18 | 2.05 : 2.26 : 5.69 | 0.43 | 1.30 | 0.43 | 0.118 | 0.039 |
| 19 | 0.59 : 0.65 : 8.76 | 0.43 | 7.00 | 0.30 | 0.171 | 0.039 |
| 20 | 1.04 : 1.15 : 7.80 | 0.43 | 3.50 | 0.34 | 0.150 | 0.039 |
| 21 | 0.62 : 0.69 : 4.68 | 0.43 | 3.50 | 0.20 | 0.253 | 0.026 |
| 22 | 2.14 : 2.37 : 16.0 | 0.43 | 3.50 | 0.70 | 0.072 | 0.054 |

Notes: 1) Weight ratio of melamine : urea : formaline in the starting material used for preparing the melamine-urea-formaldehyde prepolymer.

2) Molar ratio of melamine to urea in the starting material used.

3) Molar ratio of formaldehyde to the total of melamine and urea in the starting material.

4) Weight ratio of water-soluble cationic urea resin to the prepolymer in the dispersion.

5) Weight ratio of the anionic surfactant (A—SA) to the water-soluble cationic urea resin (KU) in the dispersion.

Comparative Example 1:

Microencapsulation was effected as in Example 10 except for using no sodium n-dodecylbenzenesulphonate. The viscosity of the reaction mixture became much higher as the reaction progressed, and microcapsules of large particle diameter were formed. Further, free oils were observed in the slurry of microcapsules obtained.

Comparative Examples 2 to 6:

By using 20 g of the aqueous solution of melamine-formaldehyde prepolymer prepared in Example 1 and the additives shown in Table 4 instead of the water-soluble cationic urea resin and Neoperex, 15 ml of the colour-former solution of Example 1 was emulsified in the same manner as in Example 1. The pH was adjusted to 5.0 by sodium hydroxide before emulsification in the case where the pH of the dispersion became below 5.0.

The dispersion was adjusted to pH 3.8 with a 10% aqueous solution of citric acid while stirring slowly at 30°C. After one hour 30 ml of water was added, and then microencapsulation proceeded for 2 hours with stirring. The slurry of microcapsules obtained in Comparative Examples 2, 3 and 6 could not be filtered by a membrane filter, and in Comparative Example 4 and 5 a free-flowing powder of microcapsules could not be obtained but rather a block of dried products was obtained. Accordingly, the slurries obtained in Comparative Examples 2 to 6 were dried *per se* in spray-drying to obtain a powder. However, the dried product was not preferable for a pressure-sensitive recording paper.

Further, microcapsules obtained in the Comparative Examples were poor in solvent-resistance, and it was too difficult to prepare a pressure-sensitive recording paper by a spot printing method using an organic solvent. Also, a paper coated with these microcapsules, even if it was obtained, was impossible to use for a pressure-sensitive recording paper because of poor colour-development by reason of loss of the colour-former solution by permeation from the micro-capsules.

TABLE 4

| Comparative Example No. | Additives | Properties of microcapsules |
|---|---|---|
| 2 | 10% gelatine (8 g) | Large agglomeration, separation of micro-capsules being very difficult |
| 3 | 10% EMA 31[1] (8 g) | Separation of micro-capsules being very difficult |
| 4 | 20% reactive tenside[2] (4 g) | Large agglomeration |
| 5 | BC 77[3] (2 g) and 5% acrylamide-acrylic acid copolymer[4] (1 g) | Large agglomeration |
| 6 | 5% Scripset 520[5] (15 g) | Separation of micro-capsules being very difficult |

Notes: 1) Ethylene-maleic anhydride copolymer, manufactured by Monsant Co.

2) Reactive tenside disclosed in U.S. Patent No. 3778383.

3) Cationic urea resin, manufactured by British Industrial Plastic Limited Co.

4) Content of acrylic acid being 42%, and average molecular weight of 400,000.

5) Styrene-maleic anhydride copolymer, manufactured by Monsant Co.

11

**0046415**

Comparative Examples 7 to 9:

By using 20 g of the aqueous solution of the prepolymer prepared in Example 12 and the additives shown in Table 5 instead of the water-soluble cationic urea resin and Neoperex, 15 ml of the colour-former solution was emulsified under the same condition as Example 1. The pH was adjusted to 5.0 by sodium hydroxide before emulsification in the case where the pH of the dispersion became below 5.0.

The dispersion was adjusted to pH 3.8 by adding a 10% aqueous solution of citric acid while stirring slowly at 30°C. After one hour 30 ml of water was added, and then, microencapsulation proceeded for 2 hours with stirring.

The slurry of microcapsules obtained in Comparative Example 8 could not be filtered by a membrane filter, and a free-flowing powder of microcapsules could not be obtained. Rather, a block of dried products was obtained. Accordingly, the slurries obtained in Comparative Examples 7 to 9 were dried *per se* by spray-drying to obtain a powder. However, the dried product was not preferable for a pressure-sensitive recording paper.

TABLE 5

| Comparative Example No. | Additives | Properties of microcapsules |
|---|---|---|
| 7 | None | Large diameter of microcapsules and large variations thereof. |
| 8 | 5% Scripset 520[1] (15 g) | Separation of microcapsules being very difficult |
| 9 | 20% reactive tenside[2] (4 g) | Large agglomeration |

Notes: 1) Styrene-maleic anhydride copolymer, manufactured by Monsant Co.

2) Reactive tenside disclosed in U.S. Patent No. 3778383.

Example 23:

Solvent-resistance test:

Ten grams of powdered microcapsules obtained in Examples 1 to 3 and 10 to 22, and Comparative Examples 1 to 9 were ground in a mortar and 200 ml of toluene was added thereto and the mixture was kept standing. The supernatant was transferred into a 500-ml flask. The remaining microcapsules in the mortar were ground again and after adding 200 ml of toluene thereto, the mixture was well mixed and the whole mixture was charged into the 500-ml flask. After washing well the mortar and the pestle with toluene, the toluene was also transferred into the flask, the toluene was further charged into the flask so that the total volume in the flask was 500 ml. The amount of the solvent such as diisopropylnaphthalene used in the colour-former solution was determined by gas chromatography (hereinafter referred to as A).

On the other hand, 10 g of the same microcapsules was placed into a 100-ml conical flask with a glass stopper, and after adding 50 g of a solvent, namely ethyl alcohol, toluene and isopropyl alcohol, respectively, into the flask, the flask was allowed to stand for 30 hours at 35°C. Then, the microcapsules in the flask were filtered and washed thoroughly with the solvent. The microcapsules were subjected to the same procedures as described above, and the amount of the solvent used for the colour-former solution was determined (hereinafter referred to as B).

The degree of retention of the core material after immersion in a solvent for printing ink was determined by the following formula:

$$\text{Degree of retention (\%)} = \frac{B}{A} \times 100$$

The solvent-resistance of microcapsules is better as the degree of retention is higher.

The results are shown in Table 6.

12

Example 24:

Preparation of pressure-sensitive recording paper:

By using microcapsules obtained in Examples 1 to 3 and 10 to 22, a printing ink composition was prepared.

Into a mixture of 580 g of isopropylalcohol and 60 g of ethylmethylketone, 140 g of cellulose nitrate (nitrogen content of 11.0%) and 60 g of modified rosin (Pentalyn® 830, manufactured by Hercules Inc. USA) were dissolved, and 140 g of powdery microcapsules was added to obtain a printing ink composition.

A pressure-sensitive recording paper (CB sheet) was obtained by printing the ink composition on a paper by a flexo printing machine. The recording paper possessed excellent dimensional stability and no wrinkles were formed on drying.

Example 25:

The CB sheet in Example 24 was placed in an oven at 150°C for one hour and was then removed from the oven. The CB sheet was superposed on a CF sheet coated with a salt of salicylate (manufactured by Kanzaki Seishi Co.) so that the coated surfaces of both sheets were in contact with one another. The superposed sheets were passed between pinch rollers set to a contact pressure of 400 kg/cm$^2$ to form a colour (colour-developing operation A).

On the other hand, the CB sheet which was not placed in the oven was subjected to the same process mentioned above to form a colour (colour-developing operation B).

The colour density of the coloured surface of the CF sheet was measured by a reflection colour densitometer (manufactured by Macbeth Co., USA). The thermal-stability index was determined by the following formaul:

$$\text{Index} = \frac{\text{Colour density in A}}{\text{Colour density in B}} \times 100$$

The results are shown in Table 6.

If the microcapsules have poor thermal stability, the paper shows poor colour development, so that the thermal-stability index become smaller. On the other hand, if the microcapsules have an excellent thermal stability, then the thermal-stability index is nearly 100.

According to the thermal-stability test, in the case of microcapsules having a small wall strength, the wall is broken by the thermal expansion of the liquid within the microcapsules which then flows out, or in the case of microcapsules having permeable wall, the liquid within the microcapsules flows out because of its reduced viscosity and because of the greater internal pressure due to thermal expansion. In such cases, the thermal stability index shows a small value. Also in the case of incomplete microencapsulation, the index is small.

Furthermore, after exposing the coated surface of the CB sheet to sunlight for 2 hours, it is superposed on the CF sheet as described above, and the superposed sheets are passed between the pinch rollers in the same manner as described above to form a colour (colour-developing operation C). The same procedures are also carried out as above using a CB sheet which has not yet been exposed to sunlight (colour-developing operation D).

The surface on which the colour was developed is subjected to determination of the colour density as described above.

The light stability index is determined by the following formula:

$$\text{Index} = \frac{\text{Colour density in C}}{\text{Colour density in D}} \times 100.$$

The results are shown in Table 6.

**0 046 415**

TABLE 6

| Example No. | Thermal-stability index (%) | light stability index (%) | Solvent-resistance (Degree of retention %) | | |
|---|---|---|---|---|---|
| | | | ethanol | toluene | isoproponol |
| 1 | 97 | 70 | 98.4 | 98.3 | 98.5 |
| 2 | 88 | 70 | 89.9 | 90.1 | 89.7 |
| 3 | 92 | 67 | 91.1 | 91.5 | 92.0 |
| 10 | 99 | 80 | 98.3 | 99.0 | 98.9 |
| 11 | 90 | 65 | 86.5 | 87.7 | 86.9 |
| 12 | 102 | 83 | 99.5 | 99.8 | 99.9 |
| 13 | 99 | 79 | 98.9 | 99.0 | 98.7 |
| 14 | 98 | 80 | 99.3 | 99.7 | 99.6 |
| 15 | 100 | 83 | 99.2 | 99.5 | 99.6 |
| 16 | 97 | 79 | 98.0 | 98.4 | 98.3 |
| 17 | 85 | 62 | 89.0 | 91.1 | 90.0 |
| 18 | 82 | 60 | 89.2 | 90.2 | 89.5 |
| 19 | 94 | 70 | 90.5 | 91.2 | 91.3 |
| 20 | 98 | 80 | 99.6 | 99.7 | 99.6 |
| 21 | 94 | 60 | 89.5 | 90.2 | 88.9 |
| 22 | 100 | 89 | 99.9 | 100 | 100 |

TABLE 6 (Continued)

| Comparative Examples No. | Thermal-stability index (%) | Light-stability index (%) | Solvent-resistance (Degree of retention %) | | |
|---|---|---|---|---|---|
| | | | ethanol | toluene | isoproponol |
| 1 | — | — | 9.3 | 10.2 | 9.5 |
| 2 | — | — | 8.2 | 10.1 | 9.0 |
| 3 | — | — | 22.4 | 20.2 | 25.0 |
| 4 | — | — | 10.5 | 15.6 | 14.2 |
| 5 | — | — | 30.2 | 32.5 | 35.1 |
| 6 | — | — | 75.1 | 70.3 | 75.5 |
| 7 | — | — | 10.3 | 13.2 | 10.5 |
| 8 | — | — | 75.6 | 79.6 | 75.8 |
| 9 | — | — | 15.2 | 19.2 | 18.3 |

14

Referential Example:

To an aqueous slurry containing 15 parts by weight of microcapsules prepared in Examples 10, 11, 12 and 20 respectively, 20 parts by weight of a 10% aqueous solution of polyvinylalcohol was mixed. The mixture was coated onto a typewriting paper by a coating rod so that the amount of micro-capsules coated was 4.0 g per m² of the paper. The coated paper was dried at 100°C for 40 seconds to obtain a CB sheet.

Thermal and light stabilities were tested in the same manner as Example 25. The results are shown in Table 7.

TABLE 7

| The Example in which the microcapsules are prepared | Thermal-stability index (%) | Light stability index (%) |
|---|---|---|
| 10 | 98 | 80 |
| 1 | 97 | 71 |
| 12 | 100 | 82 |
| 20 | 99 | 80 |

## Claims

1. Microcapsules suitable for a pressure-sensitive recording paper, said microcapsules containing a colour-former solution and the walls of the microcapsules being of a polymer of melamine and/or urea and formaldehyde, characterised in that the walls comprise a polycondensate of a water-soluble cationic urea resin with at least one prepolymer selected from melamine-formaldehyde, urea-formaldehyde and melamine-urea-formaldehyde prepolymers wherein the polycondensate is formed by the polycondensation of the prepolymer and the water-soluble cationic urea resin, which polycondensation proceeds together with a complex coacervation caused by interaction of the water-soluble cationic urea resin and an anionic surfactant.

2. A process for preparing microcapsules for a pressure-sensitive recording paper by complex coacervation using an aqueous dispersion containing a water-soluble cationic urea resin, characterised in that a water-soluble cationic urea resin and at least one prepolymer selected from melamine-formaldehyde, urea-formaldehyde and melamine-urea-formaldehyde prepolymers are polycondensed on the surface of dispersed droplets of a colour-former solution in the presence of an anionic surfactant.

3. A process according to Claim 2, wherein the prepolymer is a mixture of a melamine-formaldehyde prepolymer and an urea-formaldehyde prepolymer.

4. A process according to Claim 2 or 3, wherein starting materials from which the prepolymer is prepared contain 0.15 to 5 moles of melamine per mole of urea.

5. A process according to any one of Claims 2 to 4, wherein the anionic surfactant is present in an amount of 0.01 to 0.1 parts by weight per part by weight of the water-soluble cationic urea resin.

6. A process according to any one of Claims 2 to 5, wherein the water-soluble cationic urea resin is present in an amount of 0.01 to 0.5 parts by weight per part by weight of prepolymer.

7. A presence-sensitive recording paper or transfer sheet bearing microcapsules as claimed in Claim 1 or which have been prepared by a process as claimed in any one of Claims 2 to 6.

8. Use in pressure-sensitive recording of microcapsules as claimed in Claim 1 or which have been prepared by a process as claimed in any one of Claims 2 to 6.

## Patentansprüche

1. Mikrokapseln für ein druckempfindliches Aufzeichnungspapier, wobei die Mikrokapseln eine Farbbildner-Lösung enthalten und die Wände der Mikrokapseln aus einem Polymer von Melamin und/oder Harnstoff und Formaldehyd bestehen, dadurch gekennzeichnet, daß die Wände ein Polykondensat eines wasserlöslichen kationischen Harnstoffharzes mit mindestens einem Vorpolymer, welches unter Melamin-Formaldehyd-, Harnstoff-Formaldehyd- und Melamin-Harnstoff-Formaldehyd-Vorpolymeren ausgewählt ist, umfassen, worin das Polykondensat durch die Polykondensation des Vorpolymers und des wasserlöslichen kationischen Harnstoffharzes gebildet wird, wobei die Polykondensation zusammen mit einer Komplex-Coazervation verläuft, die durch die Wechselwirkung des

# 0 046 415

wasserlöslichen kationischen Harnstoffharzes und eines anionischen oberflächenaktiven Mittels verursacht wird.

2. Verfahren zur Herstellung von Mikrokapseln für ein druckempfindliches Aufzeichnungspapier durch Komplex-Coazervation unter Verwendung einer wässrigen Dispersion, die ein wasserlösliches kationisches Harnstoff-harz enthält, dadurch gekennzeichnet, daß ein wasserlösliches kationisches Harnstoffharz und mindestens ein Vorpolymer, welches unter Melamin-Formaldehyd-, Harnstoff-Formaldehyd- und Melamin-Harnstoff-Formaldehyd-Vorpolymeren ausgewählt ist, auf der Oberfläche von dispergierten Tröpfchen einer Farbbildner-Lösung in Gegenwart eines anionischen oberflächenaktiven Mittels polykondensiert werden.

3. Verfahren nach Anspruch 2, dadurch gekennzeichnet, daß das Vorpolymer ein Gemisch eines Melamin-Formaldehyd-Vorpolymers und eines Harnstoff-Formaldehyd-Vorpolymers ist.

4. Verfahren nach Anspruch 2 oder Anspruch 3, dadurch gekennzeichnet, daß die Ausgangsmaterialien, aus denen das Vorpolymer hergestellt wird, 0,15 bis 5 Mol Melamin pro Mol Harnstoff enthalten.

5. Verfahren nach einem der Ansprüche 2 bis 4, dadurch gekennzeichnet, daß das anionische oberflächenaktive Mittel in einer Menge von 0,01 bis 0,1 Gewichtsteilen pro Gewichtsteil des wasserlöslichen kationischen Harnstoffharzes vorhanden ist.

6. Verfahren nach einem der Ansprüche 2 bis 5, dadurch gekennzeichnet, daß das wasserlösliche kationische Harnstoffharz in einer Menge von 0,01 bis 0,5 Gewichtsteilen pro Gewichtsteil Vorpolymer vorhanden ist.

7. Druckempfindliches Aufzeichnungspapier oder Übertragungsbogen mit Mikrokapseln gemäß Anspruch 1 oder hergestellt nach einem Verfahren gemäß einem der Ansprüche 2 bis 6.

8. Verwendung der Mikrokapseln nach Anspruch 1 oder der nach einem Verfahren nach den Ansprüchen 2 bis 6 hergestellten Mikrokapseln zum druckempfindlichen Aufzeichnen.

## Revendications

1. Microcapsules covenant à un papier autocopiant sensible à la pression, ces microcapsules contenant une solution d'agent de formation de la couleur et les parois de la microcapsule étant constituées d'un polymère de mélamine et/ou d'urée et de formaldéhyde, caractérisées en ce que les parois comprennent un polycondensat de résine d'urée cationique hydrosoluble avec au moins un polymère choisi parmi les prépolymères mélamine-formaldéhyde, urée-formaldéhyde et mélamine-urée-formaldéhyde dans lequel le polycondensat est formé par la polycondensation du prépolymère et de la résine d'urée cationique hydrosoluble, cette polycondensation se déroulant avec une coacervation complexe causée par interaction de la résine d'urée cationique hydrosoluble et d'un agent tensio-actif anionique.

2. Procédé de préparation de microcapsules pour un papier autocopiant sensible à la pression par coacervation complexe à l'aide d'une dispersion aqueuse contenant une résine d'urée cationique hydrosoluble, caractérisé en ce qu'une résine d'urée cationique hydrosoluble et au moins un prépolymère choisi parmi les prépolymères de mélamine-formaldéhyde, urée-formaldéhyde et mélamine-urée-formaldéhyde sont polycondensés à la surface de gouttelettes dispersées d'une solution d'agent de formation de la couleur en présence d'un agent tensio-actif anionique.

3. Procédé selon la revendication 2, caractérisé en ce que le prépolymère est un mélange de prépolymère mélamine-formaldéhyde et d'un prépolymère urée-formaldéhyde.

4. Procédé selon la revendication 2 ou 3, caractérisé en ce que les matériaux de départ à partir desquels on prépare le prépolymère contiennent de 0,15 à moles de mélamine par mole d'urée.

5. Procédé selon l'une quelconque des revendications 2 à 4, caractérisé en ce que l'agent tensio-actif anionique est présent en quantité de 0,01 à 0,1 partie en poids par partie en poids de la résine d'urée cationique hydrosoluble.

6. Procédé selon l'une quelconque des revendications 2 à 5, caractérisé en ce que la résine d'urée cationique hydrosoluble est présente en quantité de 0,01 à 0,5 partie en poids par partie en poids de prépolymère.

7. Paper autocopiant sensible à la pression ou feuille de transfert portant des microcapsules telles que revendiquées dans la revendication 1 ou qui a été préparée par un procédé tel que revendique dans l'une quelconque des revendications 2 à 6.

8. Utilisation dans l'autocopie sensible à la pression de microcapsules telles que revendiquées dans la revendication 1 ou qui ont été préparées par un procédé tel que revendiqué dans l'une quelconque des revendications 2 à 6.

16